# EUROPÄISCHE PATENTSCHRIFT

(11) **EP 3 322 640 B1**
(45) Veröffentlichungstag und Bekanntmachung des Hinweises auf die Patenterteilung: **13.10.2021**
(21) Anmeldenummer: 16729899.1
(22) Anmeldetag: 16.06.2016
(51) Int. Cl.: B64C 27/54, B64C 27/68

(54) **STEUERSTANGE ZUM VERSTELLEN VON EINEM ROTORBLATT EINES HUBSCHRAUBERS**
CONTROL BAR FOR ADJUSTING A ROTOR BLADE OF A HELICOPTER
BARRE DE CONTROLE POUR AJUSTER UNE PALE DE ROTOR D'HÉLICOPTÈRE

(30) Priorität: 15.07.2015 DE 102015213226
(43) Veröffentlichungstag der Anmeldung: 23.05.2018
(73) Patentinhaber: ZF Friedrichshafen AG, 88046 Friedrichshafen (DE)
(72) Erfinder: GÖTTE, Jürgen, 34246 Vellmar (DE); HAUSBERG, Andre, 34131 Kassel (DE)
(74) Vertreter: ZF Friedrichshafen AG
(86) Internationale Anmeldenummer: PCT/EP2016/063818
(87) Internationale Veröffentlichungsnummer: WO 2017/008983

(56) Entgegenhaltungen:
- DE-A1-102009 001 393
- DE-U1-202011 110 665
- FR-A1- 2 529 861
- US-A1- 2007 166 162

## Beschreibung

Die Erfindung betrifft eine Steuerstange zum Verstellen von einem Rotorblatt eines Hubschraubers, wobei die Steuerstange in Längsrichtung verstellbar ist, umfassend zumindest ein Anlagebereichselement, zumindest ein Anschlagelement, das ausgebildet ist die Verstellbarkeit der Steuerstange in Längsrichtung auf einen vorgebbaren Stellbereich in Zusammenwirken mit dem zumindest einen Anlagebereichselement zu begrenzen.

Aus der DE102009001393A1 ist eine Steuerstangenanordnung zum Verstellen von Rotorblättern bekannt. Die dort beschriebene Steuerstangenanordnung zum Verstellen von Rotorblättern eines Hubschraubers hat eine Steuerstange mit zwei endseitig vorgesehenen Lageraugen und einen zwischen den Lageraugen angeordneten längenverstellbaren Stellbereich, wobei der Stellbereich auch als Hub oder Hubbereich bekannt ist. Die Steuerstange ist an ihrem rotorblattseitigen Ende über das eine Lagerauge mit dem Rotorblatt und an ihrem anderen, taumelscheibenseitigen Ende, über das andere Lagerauge mit einer Taumelscheibe verbunden. Der Abstand zwischen den beiden Lageraugen ist durch den längenverstellbaren Stellbereich mit einem in dem Stellbereich angeordneten Antrieb während des Flugs einstellbar. Zur Längenverstellung der Steuerstange sind bei der vorbekannten Steuerstangenanordnung als Antrieb im Stellbereich ein Elektromotor und ein Getriebe vorgesehen. Die einzelnen Steuerstangen können zudem zur Grund-/Voreinstellung in ihrer Längsrichtung verstellt werden. Die Grund-/Voreinstellung erfolgt in regelmäßigen Abständen und ausschließlich am Boden bei stehendem Rotor. Für die mechanische Grund-/Voreinstellung der Steuerstange wird eine Sicherungsmutter gelöst und ein darunter liegender Sicherungsring angehoben. Eine dann zugängliche Verzahnung der Spindelmutter kann mit einem Zahnschlüssel in einem Raster der Verzahnung verstellt werden.

Die dort beschriebene Steuerstange ermöglicht es, ein Rotorblatt eines Hubschraubers einzeln im Flug zu justieren. Mit diesem als Inflight-Tuning bezeichneten Verfahren lassen sich Vibrationen, die durch eine Ungleichheit der Blätter entstehen, kontinuierlich in Abhängigkeit eines Flugzustandes reduzieren. Nachteilig an dieser Anordnung ist, dass die dort beschriebenen Anschläge zur Hubbegrenzung oder Stellbereichsfestlegung durch äußere Kräfte und die Kräfte aus dem Spindeltrieb stark belastet werden können, wenn die Spindelmutter am jeweiligen Anschlag anliegt oder gegenfährt. Ein weiterer Nachteil besteht darin, dass eine Mechanik für die Grund-/Voreinstellung der Steuerstange äußerst komplex ist, manuell erfolgt und fehleranfällig ist. Eine weitere Steuerstangenanordnung wird in US2007166162 offenbart. Der Erfindung liegt die Aufgabe zugrunde, die Nachteile des Standes der Technik zu beseitigen und insbesondere eine Steuerstange der eingangs beschriebenen Gattung vorzuschlagen, bei der die Grund-/Voreinstellung der Steuerstange vereinfacht und schneller durchführbar wird. Zudem soll eine Teilvielfalt reduziert werden, was die Steuerstange leichter und kostengünstiger macht. Ein weiterer Aspekt der Erfindung liegt darin, ein Verfahren für eine Grund-/Voreinstellung bereitzustellen.

Erfindungsgemäß wird dies durch die Merkmale der Ansprüche 1 und 11 gelöst. Im Sinne dieser Erfindung ist unter einem Anschlagelement ein körperliches Element zu verstehen, dass eingerichtet ist, eine Verdrehung eines anderen körperlichen Elements, insbesondere des Anlagebereichselements um eine Längsachse Steuerstange zu begrenzen. Dazu kann das Anschlagelement hinsichtlich des verdrehbaren Anlagebereichselements insbesondere drehfest anordenbar sein und ausgebildet sein, Kräfte und/oder Drehmomente des drehenden oder rotierenden Anlagebereichselements aufzunehmen und beispielsweise in benachbarte Bauteile abzuleiten oder abzuführen.

Im Sinne dieser Erfindung ist unter einem Anlagebereichselement ein körperliches Element zu verstehen, dass eingerichtet ist, an dem zumindest einen Anschlagelement zum Anliegen zu kommen. Hierzu weist es insbesondere einen Bereich auf, der sich zumindest teilweise mit dem Anschlagelement in Umfangsrichtung radial überdeckt und ausgebildet ist, durch die Verdrehung verursachten Kräfte und/oder Drehmomente in Umfangsrichtung in das Anschlagelement einzuleiten.

Im Sinne dieser Erfindung bedeutet der Begriff "Zusammenwirken" insbesondere, dass das Anlagebereichselement mit dem zumindest einen Anschlagelement in Kontakt bringbar ist, um die Verstellung der Steuerstange zu begrenzen.

Die Steuerstange kann ein koaxial zu ihr und drehbar um Ihre Längsachse angeordnetes erstes Trägerelement mit zumindest einem sich in Längsrichtung der Steuerstange erstreckenden und in Umfangsrichtung unterbrochenen ersten Vorsprung aufweisen, wobei dieser Vorsprung das Anlagebereichselement bildet, wobei ein erster Anlagebereich an einem ersten Ende und ein zweiter Anlagebereich an einem dem ersten Ende im Wesentlichen gegenüberliegenden zweiten Ende des ersten Vorsprungs angeordnet sein kann. Das als Vorsprung, der auch als Nocken oder Schulter bekannt ist, ausgebildete Anlagebereichselement ist konstruktiv einfach herzustellen und baut besonders kompakt. Zudem kann das Anlagebereichselement mit einem Antriebselement, das die Steuerstange in Längsrichtung verstellen kann, verbunden sein.

Beispielsweise lassen sich ein als Gewindebolzen oder Anschlagschraube ausgeführtes Anschlagelement von einer ersten in eine zweite Position überführen und umgekehrt. In der ersten Position kann der Gewindebolzen eingeführt sein. In der zweiten Position, in welche der Gewindebolzen mittels Herausführen überführt werden kann, kann der Gewindebolzen die Verdrehung über den Hubbereich hinaus freigeben, weil er dann in der zweiten Position nicht mit dem Anlagebereichselement zur Begrenzung des Hubbereichs zusammenwirken kann, d.h. die Verstellung der Steuerstange begrenzen kann. So kann eine Grund-/Voreinstellung der Steuerstange vorgenommen werden, welche am Boden bei stehendem Rotor durchgeführt werden kann. Die Grund-/Voreinstellung kann beispielsweise elektromotorisch erfolgen, sodass in vorteilhafter Weise auf eine manuelle Bedienung verzichtet werden kann. Bei einer Grund-/Voreinstellung wird die Steuerstange um Größenordnungen von bis zu 40 Millimeter (mm) in der Längsrichtung verändert. Es erfolgt sozusagen eine Grobeinstellung der Steuerstange.

Eine Verstellbarkeit der Steuerstange in Längsrichtung zur Reduzierung von Vibrationen während des Fluges, auch In-Fight-Tuning genannt, kann dadurch begrenzt werden, dass das zumindest eine Anlagebereichselement an dem zumindest einen Anschlagelement in Umfangsrichtung der Steuerstange zum Anliegen kommt. Damit ist gemeint, dass das Anlagebereichselement radial beabstandet von der Längsachse in eine von zwei Drehrichtungen um die Längsachse rotieren kann, und zwar so weit, bis das Anlagebereichselement an das Anschlagelement gedreht wird, es also an dem Anschlagelement anliegt und das Anschlagelement eine weitere Verdrehung verhindert. Das Anlagebereichselement kann beispielsweise mit einem Antriebselement verbunden oder integral mit ihm ausgebildet sein, das dazu ausgebildet ist, die Steuerstange in Längsrichtung zu bewegen. Hierdurch baut die Steuerstange besonders kompakt, leicht und kostengünstig, weil sich ein bereits vorhandenes Antriebselement für eine weitere Funktion nutzen lässt. Um den vorgebbaren Verstellbereich oder Hubbereich zu verändern, kann das zumindest eine Anschlagelement in Umfangsrichtung der Steuerstange verstellt werden. Die Verstellbarkeit während des Fluges dient sozusagen - im Gegensatz zur Grobeinstellung - einer Feineinstellung und bewegt sich um Größenordnungen von bis zu 1,5 Millimeter. Es hat sich gezeigt, dass eine Wirkbeziehung in Umfangsrichtung zwischen Anlagebereichselement und Anschlagelement wesentlich geringere auf den Anschlag wirkende Kräfte verursacht als beispielsweise eine in Längsrichtung der Steuerstange wirkende Wirkbeziehung zwischen Anlagebereichselement und Anschlagelement. Zudem hat sich gezeigt, dass mit einem einzigen Anschlagelement sowohl eine Verlängerung als auch eine Verkürzung der Steuerstange in Längsrichtung zum In-Flight-Tuning begrenzbar ist.

Es hat sich darüber hinaus herausgestellt, dass mit einem zwischen zwei Positionen verfahrbaren Anschlagelement sowohl der Stellbereich begrenzen lässt als auch die Grund-/Voreinstellung ändern lässt.

In einer bevorzugten Ausführungsform kann vorgesehen sein, dass das zumindest eine Anschlagelement ein Gewindebolzen oder eine Anschlagschraube ist, wobei er derart angeordnet ist, dass seine Längsachse im Wesentlichen senkrecht zur Längsachse der Steuerstange ausgerichtet ist, wobei der zumindest eine Gewindebolzen in radialer Richtung, insbesondere von radial innen nach radial außen von der ersten Position in die zweite Position überführbar ist. Darüber hinaus ist es bevorzugt, dass das zumindest eine Anschlagelement ein Gewindebolzen ist, der in eine entsprechende Ausnehmung, insbesondere Bohrung eines Steuerstangengehäuses einführbar ist. Weiterhin ist es bevorzugt, dass das Anschlagelement von einem ersten Zustand in einen zweiten Zustand überführbar ist, wobei das Anschlagelement in dem ersten Zustand die Verstellbarkeit der Steuerstange begrenzt und in dem zweiten Zustand die Verstellbarkeit der Steuerstange über den vorgebbaren Stellbereich hinaus zulässt.

Der Gewindebolzen oder die Anschlagschraube kann beispielsweise in eine Ausnehmung, insbesondere eine Bohrung eines Steuerstangengehäuses eingeschraubt werden. Ist der Gewindebolzen eingeschraubt, so befindet er sich in der ersten Position, in der die Verstellbarkeit begrenzt wird. Ist der Gewindebolzen aus der Bohrung herausgeschraubt, so befindet er sich in der zweiten Position, die die Verstellbarkeit über den Stellbereich zulässt. Es sind auch weitere Achswinkel vorstellbar. Ein als Gewindebolzen oder als Anschlagschraube ausgeführtes Anschlagelement ist konstruktiv äußerst einfach und preiswert herzustellen.

Sollte es bauraumbedingt nicht möglich sein, über den Umfang der Steuerstange den zumindest einen Anschlag zu versetzen, weil beispielsweise Peripheriegeräte angeordnet sind, so lässt sich die Stellbereichsveränderung in vorteilhafter Weise mit einem zweiten Trägerelement, das auch als Anschlagring bezeichnet wird, verwirklichen. Hierbei übernimmt ein zweiter Vorsprung, ebenfalls als Nocken oder Schulter oder dergleichen bekannt, die Funktion des Anschlagelements. Der Anschlagring ist vorzugsweise um die Längsachse drehbar gelagert und kann über den Umfang verteilt mehrere Ausnehmungen aufweisen. Zur Fixierung oder Sicherung des Anschlagrings wird das Fixiermittel, beispielsweise ein Sicherungsbolzen, durch eine Ausnehmung im Steuerstangengehäuse in eine der Ausnehmungen des Anschlagrings eingeführt, so dass der Anschlagring über den Sicherungsbolzen mit dem Steuerstangengehäuse drehfest gekoppelt ist.

Daher ist es ein weiterer Aspekt dieser Erfindung, eine Steuerstange zum Verstellen von einem Rotorblatt eines Hubschraubers, wobei die Steuerstange in Längsrichtung verstellbar ist, umfassend: zumindest ein Anlagebereichselement, zumindest ein Anschlagelement, das ausgebildet ist, die Verstellbarkeit der Steuerstange in Längsrichtung auf einen vorgebbaren Stellbereich in Zusammenwirken mit dem zumindest einen Anlagebereichselement zu begrenzen, vorzusehen, wobei das Anschlagelement von einem ersten Zustand in einen zweiten Zustand überführbar ist, wobei das zumindest eine Anschlagelement in dem ersten Zustand die Verstellbarkeit der Steuerstange begrenzt und in dem zweiten Zustand die Verstellbarkeit der Steuerstange über den vorgebbaren Stellbereich hinaus zulässt.

Besonders bevorzugt ist es, dass die Steuerstange ein koaxial zu ihr und drehbar um Ihre Längsachse angeordnetes erstes Trägerelement mit zumindest einem sich in Längsrichtung der Steuerstange erstreckenden und in Umfangsrichtung unterbrochenen ersten Vorsprung aufweist, wobei dieser Vorsprung das Anlagebereichselement bildet, und dass das zumindest eine Anschlagelement an zumindest einem koaxial zur Steuerstange angeordneten zweiten Trägerelement angeordnet ist, wobei das Anschlagelement mittels eines sich in Längsrichtung der Steuerstange erstreckenden zweiten Vorsprungs gebildet wird, wobei das Anschlagelement in dem ersten Zustand mit einem Steuerstangengehäuse verbunden ist, wodurch in dem ersten Zustand die Verstellbarkeit der Steuerstange begrenzt wird und in dem zweiten Zustand diese Verbindung aufgehoben ist, wodurch die Verstellbarkeit über den vorgebbaren Stellbereich hinaus zugelassen wird.

Z. B. lassen sich die als Anschlagringe ausgeführten Anschlagelemente von einem ersten in einen zweiten Zustand überführen und umgekehrt. In dem ersten Zustand ist der Anschlagring beispielsweise gegen Verdrehen, beispielsweise mittels eines Sicherungsbolzens gesichert, also fixiert. Damit ist der Anschlagring auch mit dem Steuerstangengehäuse verbunden. In dem zweiten Zustand ist der Sicherungsbolzen gelöst oder entfernt, d.h., die Verbindung ist aufgehoben, wodurch der Anschlagring beispielsweise drehbar wird. So kann beispielsweise bei der Grund-/Voreinstellung das als Schulter ausgebildete Anlagebereichselement das als Schulter ausgebildete Anschlagelement und damit auch den Anschlagring über den vorgebbaren Stellbereich hinaus verdrehen oder anders ausgedrückt: mitschleppen.

Darüber hinaus ist es bevorzugt, dass die Steuerstange in Längsrichtung elektrisch mittels eines Aktors verstellbar ist.

Besonders bevorzugt ist es, wenn der Aktor zur Verstellung der Steuerstange einen Spindeltrieb oder dergleichen umfasst, wobei eine Spindel des Spindeltriebs über eine Zahnradstufe von einem über einen Elektromotor angetriebenen Planetengetriebe antreibbar ist, und wobei die Spindel zur Verstellung der Steuerstange eine Spindelmutter axial bewegt und wobei die Spindel das Antriebselement ist.

Vorzugsweise ist der Spindeltrieb so ausgelegt, dass dieser den gesamten erforderlichen Stellbereich der Steuerstange abdeckt. Es sind jedoch auch andere Antriebe einsetzbar.

Weiterhin ist es bevorzugt, wenn das zumindest eine Anlagebereichselement drehfest mit einem Zahnrad der Zahnradstufe verbunden ist, wobei das Zahnrad mit der Spindel des Spindeltriebs verbunden ist. Es ist aber auch denkbar, das Zahnrad und die Spindel integral auszubilden. Durch die drehfeste Kopplung des Anlagebereichselements mit der Zahnradstufe ist eine direkte Kraft- und/oder Drehmomentübertragung auf das zumindest eine Anschlagelement möglich

Besonders ist es bevorzugt, wenn das zumindest eine Anlagebereichselement integral, d. h. einstückig, mit einem Zahnrad der Zahnradstufe ausgebildet ist, wobei das Zahnrad mit der Spindel des Spindeltriebs verbunden ist. Auch können alle drei Komponenten integral ausgebildet sein. Ebenfalls ist es bevorzugt, dass der Aktor in Abhängigkeit von Sollvorgaben und von Istpositionen sowie von Sensorsignalen ansteuerbar ist, d. h. geregelt und/oder gesteuert werden kann. Eine Steuer- und/oder Regelungseinrichtung kann anhand einer Ist-Position und Sensoren Soll-Vorgaben ermitteln. Ein Betriebszustand der Anlage kann durch eine Anzeige dargestellt werden.

Im Rahmen einer weiteren bevorzugten Ausführung der Erfindung kann vorgesehen sein, dass das zumindest eine Anschlagelement in Umfangsrichtung der Steuerstange zur Veränderung des Stellbereichs verstellbar ist. Hierdurch ist es möglich, den Stellbereich je nach Anforderung zu verkleinern oder zu vergrößern. So ist es denkbar, einen von beispielsweisen zwei Anschlagelementen, die einen Schwenkbereich von beispielsweise 210° zulassen in Umfangsrichtung derart zu versetzen, dass ein größerer Schwenkbereich, z. B. 300° oder ein kleinerer Schwenkbereich, z. B. 180° verwirklicht werden kann. So lässt sich mit nur einem Bauteil, insbesondere einem Anschlagelement sowohl die Stellbereichsbegrenzung als auch die Grund-/Voreinstellung verwirklichen, was zu einer erheblichen Teilereduzierung, mechanischen Einfachheit und Kostensenkung führt.

Ein weiterer Aspekt der Erfindung ist es, ein Verfahren bereitzustellen, und zwar ein Verfahren zur Längsverstellung einer Steuerstange, die Steuerstange umfassend, zumindest ein Anlagebereichselement, zumindest ein Anschlagelement, das ausgebildet ist, die Verstellbarkeit der Steuerstange in Längsrichtung auf einen vorgebbaren Stellbereich in Zusammenwirken mit dem zumindest einen Anlagebereichselement zu begrenzen, umfassend die Schritte:
- Überführen des zumindest einen Anschlagelements von einer ersten Position P1 in eine zweite Position P2 oder Überführen des zumindest einen Anschlagelements von einen ersten Zustand Z1 in einen zweiten Zustand Z2 in einem ersten Schritt 110 zu einem Zeitpunkt t1,
- Überführen der Steuerstange von einer ersten Länge L1 in eine zweite Länge L2 in einem zweiten Schritt 120 in einem Zeitpunkt t2,
- Überführen des zumindest einen Anschlagelements von der zweiten Position in die erste Position oder Überführen des zumindest einen Anschlagelements von dem zweiten Zustand in den ersten Zustand in einem dritten Schritt 110 zu einem Zeitpunkt t3, wobei t1 <t2<t3 ist.

Darüber hinaus ist ein Verfahren bevorzugt, dass die Überführung im zweiten Schritt 120 elektromotorisch und die Überführung im ersten Schritt 110 und dritten Schritt 130 manuell erfolgt

Das Verfahren ermöglicht eine schnellere und fehlerfreiere Verstellung als die im Stand der Technik bekannten Verfahren, bei denen die Verstellung manuell erfolgte.

Nachfolgend wird die vorliegende Erfindung anhand von Zeichnungen weiter erläutert.

Es zeigen:
- Figur 1: eine geschnittene, dreidimensionale Ansicht einer erfindungsgemäßen Steuerstange;
- Figur 2: eine dreidimensionale Ansicht einer ersten bevorzugten Ausführungsform;
- Figur 3: eine dreidimensionale Ansicht einer zweiten bevorzugten Ausführungsform;
- Figur 4: die bevorzugte Ausführungsform der Fig. 3 in einem Längsschnitt;
- Figur 5: eine dreidimensionale Ansicht einer dritten bevorzugten Ausführungsform;
- Figur 6: eine vierte bevorzugte Ausführungsform in einem Querschnitt; und
- Figur 7: eine beispielhafte Vorrichtung zur Anschlagelementverstellung.

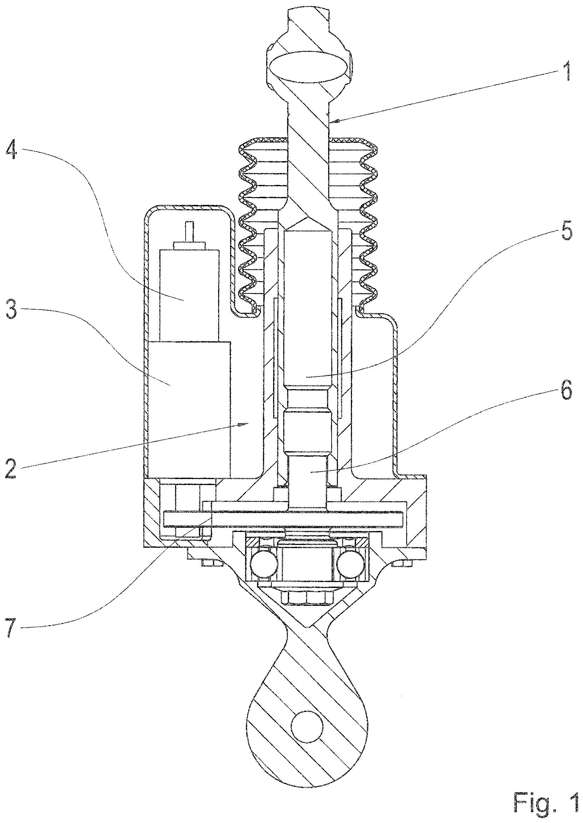

Eine erfindungsgemäße Steuerstange zum Verstellen von einem Rotorblatt eines Hubschraubers weist in an sich bekannter Weise an ihrem einen Ende eine rotorblattseitige Lageraufnahme und an ihrem anderen Ende eine motorseitige Langeraufnahme auf. Die Steuerstange 1 ist in Längsrichtung innerhalb eines vorgegebenen Stellbereichs verstellbar ausgeführt. Zur Steuerstangenverstellung weist die Steuerstange 1 zumindest einen Aktor 2 auf, welcher einen Spindeltrieb umfasst, der über ein Planetengetriebe 3 von einem Elektromotor 4 angetrieben wird. Der Spindeltrieb umfasst eine mit der Steuerstange 1 verbundene Spindelmutter 5, die durch eine Spindel 6 axial bewegt wird. Der Antrieb der Spindel 6 erfolgt über eine Zahnrad- bzw. Stirnradstufe 7, welche über das Planetengetriebe 3 von dem Elektromotor 4 angetrieben wird. Eine detaillierte Ansicht der Steuerstangenverstellung ist insbesondere in Fig. 1 dargestellt.

Erfindungsgemäß ist vorgesehen, dass der von zumindest einem Anschlagelement vorgegebene Stellbereich veränderbar ist, eine Wirkbeziehung zwischen dem den Dreh- oder Schwenkbereich der Spindel 6 begrenzenden Anschlagelement und der sich drehenden Spindel 6 in Umfangsrichtung erfolgt und eine Grund-/Voreinstellung der Steuerstange schnell und nahezu fehlerfrei möglich ist.

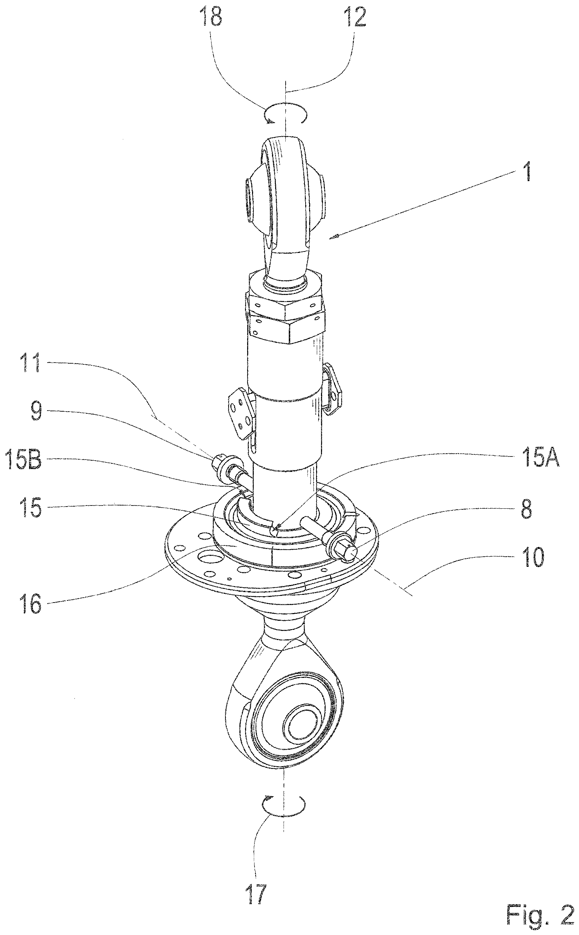

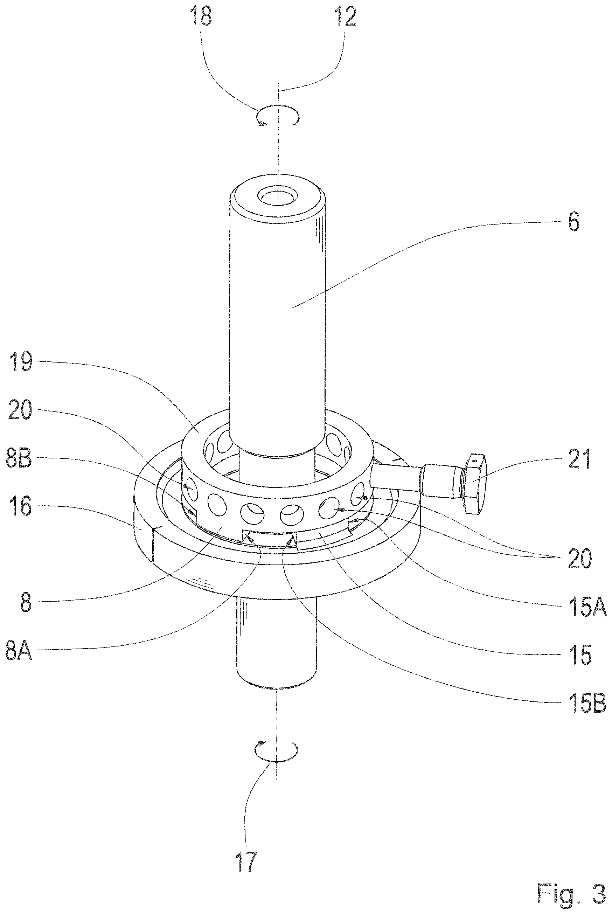

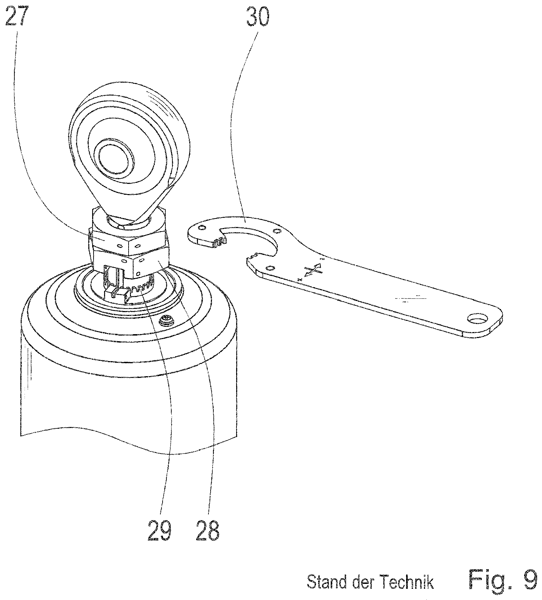

Wie dies erreicht wird, zeigen die Figuren 2 bis 6, wobei die Fig. 2 eine bevorzugte Ausführungsform mit einem als Gewindebolzen ausgeführten Anschlagelement 8, 9 und die Figuren 3 bis 8 eine weitere bevorzugte Ausführungsformen mit einem als Schulter ausgeführten Anschlagelement 8, 9 zeigen. Figuren 9 bis 11 zeigen Stand der Technik.

In Fig. 2 ist eine erste bevorzugte Ausführungsform dargestellt. Der Dreh- oder Schwenkbereich der nicht dargestellten Spindel 6 wird durch zwei als Gewindebolzen ausgeführte Anschlagelemente 8, 9 begrenzt. Jeweilige Längsachsen 10, 11 der Gewindebolzen 8, 9 schneiden eine Längsachse 12 der Steuerstange 1 jeweils lotrecht. Die zwei Gewindebolzen 8, 9 sind bezüglich der Längsachse 12 der Steuerstange 1 gegenüberliegend angeordnet, so dass die zwei Längsachsen 10, 11 eine gemeinsame Längsachse bilden. In einem nicht dargestellten Steuerstangengehäuse 13 sind über den Umfang verteilt mehrere Gehäusebohrungen 14 vorgesehen, die die Gewindebolzen 8, 9 aufnehmen können. Die Gewindebolzen 8, 9 kommen in eingeführtem Zustand nicht mit der Spindel 6 in Kontakt. Die Steuerstange 1 weist weiterhin ein als Nocken oder Schulter ausgeführtes Anlagebereichselement 15 auf, das mit einem als Zahnrad 16 der Zahnradstufe 7 ausgebildeten ersten Trägerelement verbunden ist. Das Zahnrad 16 wiederum ist drehfest mit der Spindel 6 verbunden. Es kann aber auch integral mit der Spindel 6 ausgebildet sein. Wird die Spindel 6 zur Längsverstellung gegen den Uhrzeigersinn 18 gedreht, so kommt die Schulter 15 mit einem ersten Anlagebereich 15A an dem ersten Gewindebolzen 8 zum Anliegen. In umgekehrter Drehrichtung 17 kommt die Schulter 15 mit einem zweiten Anlagebereich 15B an dem zweiten Gewindebolzen 9 zum Anliegen. Die Schulter 15 ist integral, also einstückig, mit dem Zahnrad 16 der Zahnradstufe 7 ausgebildet. Der in der Fig. 2 dargestellte Drehbereich der Spindel 6 beträgt unter Berücksichtigung der Ausdehnung der Schulter 15 und der Gewindebolzen 8, 9 in Umfangsrichtung ca. 150°. Zum Verstellen des Verstellbereichs kann einer der Gewindebolzen 8 oder 9 oder beide Gewindebolzen 8, 9 aus der jeweiligen Gehäusebohrung 14 gelöst und in eine andere Gehäusebohrung 14 eingeführt werden. So ist, wenn man einen der Gewindebolzen 8, 9 entfernen würde, der Verstellbereich auf einen Drehbereich der Spindel 6 zwischen ca. 15° und ca. 345° verstellbar. Dabei ist dem Fachmann klar, dass die Verstellung nicht stufenlos erfolgt, sondern insbesondere in Abhängigkeit der Anzahl und in Abhängigkeit der Durchmesser der Gehäusebohrungen 14 erfolgt.

Die Gewindebolzen 8, 9 befinden sich in einer ersten Position P1. Soll die Grund-/Voreinstellung durchgeführt werden, so werden die Gewindebolzen 8, 9 aus der ersten Position P1 in eine zweite Position P2 überführt, indem sie herausgeschraubt werden. Nun kann die Schulter 15, angetrieben mittels der Spindel 6, über den ehemals vorgegebenen Stellbereich hinaus verdreht werden, um die Steuerstange in Längsrichtung neu grob einzustellen. Ist die gewünschte Länge erreicht, werden die Gewindebolzen 8, 9 von der zweiten Position in die erste Position überführt, indem sie in eine gewünschte Gehäusebohrung 14 eingeschraubt werden.

Fig. 3 zeigt eine weitere bevorzugte Ausführungsform. Hierbei ist ein als Nocken oder Schulter ausgebildetes sich in Längsrichtung erstreckendes erstes Anschlagelement 8 vorgesehen, das integral an einem als Anschlagring ausgebildeten zweiten Trägerelement 19 angeordnet ist und zwei Anschlagbereiche 8A, 8B aufweist. Der Anschlagring 19 ist koaxial zur Spindel 6 drehbar angeordnet und wird von einem nicht dargestellten Führungselement, das innerhalb des Steuerstangengehäuses 13 angeordnet ist, geführt. Zur Fixierung des Anschlagrings 19 wird ein als Sicherungsbolzen ausgebildetes Fixiermittel 21 in eine im nicht dargestellten Gehäuse 13 angeordnete Bohrung 14 und in eine von mehreren über den Umfang des Anschlagrings 19 angeordnete Bohrungen 20 eingeführt. Wird die Spindel 6 zur Längsverstellung gegen den Uhrzeigersinn 18 gedreht, so kommt die Schulter 15 mit ihrem Anlagebereich 15A an dem Nocken 8 zum Anliegen. In umgekehrter Drehrichtung 17 kommt die Schulter 15 mit ihrem Anlagebereich 15B an dem Nocken 8 zum Anliegen. Abzüglich einer jeweiligen Ausdehnung der Schultern 8, 15 in Umfangsrichtung ist gemäß Fig. 3 gegen den Uhrzeigersinn 18 eine ca. 335°-Drehung und mit dem Uhrzeigersinn 17 eine ca. 5°-Drehung der Spindel 6 möglich. Der Winkelbereich wird also durch die Ausdehnung der jeweiligen Schultern 8, 15 in Umfangsrichtung bestimmt. Zum Verstellen des Verstellbereichs wird der Sicherungsbolzen 21 aus der Bohrung 14 und 20 herausgenommen. Jetzt lässt sich der Anschlagring 19 mit der Schulter 8 um die Achse 12 drehen und der Stellbereich neu einstellen. Zum Fixieren des Anschlagrings 19 wird eine gewünschte Bohrung 20 mit der Gehäusebohrung 14 in Deckung gebracht und der Sicherungsbolzen 21 eingeführt.

Der Anschlagring 19 ist fixiert, sodass sich die Schulter 8 in einem ersten Zustand Z1 befindet. Soll die Grund-/Voreinstellung durchgeführt werden, so wird die Schulter 8 aus dem ersten Zustand Z1 in einen zweiten Zustand Z2 überführt, in dem der Sicherungsbolzen 21 aus den entsprechenden Bohrungen 14, 20 entfernt wird. Nun kann die Schulter 15, angetrieben mittels der Spindel 6, über den ehemals vorgegebenen Stellbereich hinaus verdreht werden, um die Steuerstange in Längsrichtung neu grob einzustellen. Dabei schleppt die Schulter 15 die Schulter 8 in Drehrichtung 17, 18 mit. Ist die gewünschte Länge erreicht, wird der Sicherungsbolzen 21 in die Bohrung 14 und in eine entsprechende Bohrung 20 eingeführt.

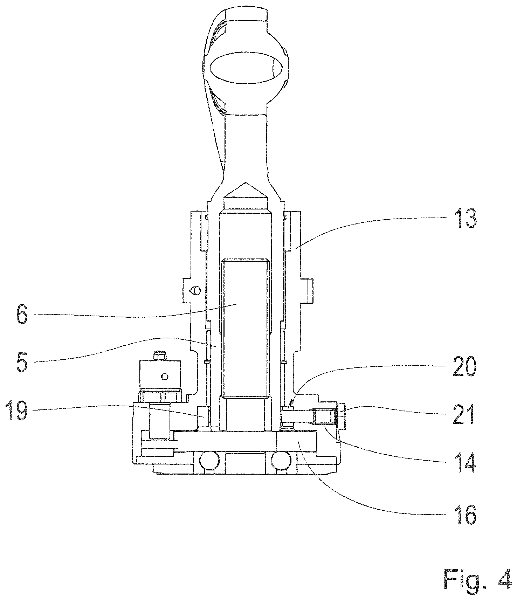

Fig. 4 zeigt die bevorzugte Ausführungsform der Fig. 3 in einer weiteren Ansicht. Zu erkennen ist, dass der Sicherungsbolzen 21 durch die Gehäusebohrung 14 in eine Bohrung 20 eingeführt ist. Damit ist der Dreh- oder Schwenkbereich der Spindel 6 auf einen Winkelbereich von ca. 330° begrenzt. Wie weiterhin zu erkennen ist, kommt der Sicherungsbolzen 21 weder mit der Spindelmutter 5 noch mit der Spindel 6 in Kontakt.

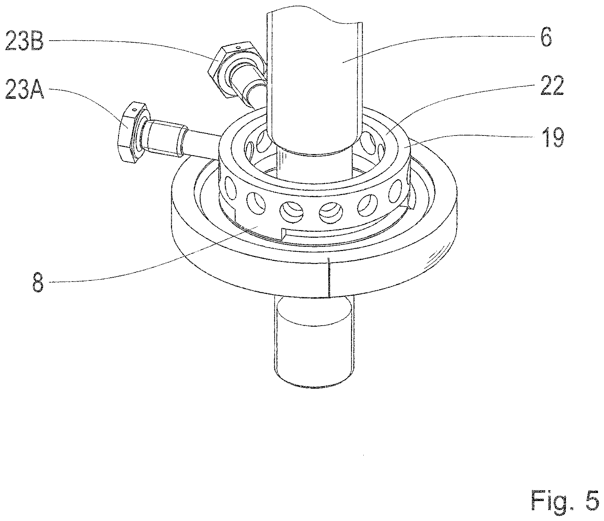

Fig. 5 zeigt eine weitere bevorzugte Ausführungsform. Im Unterschied zu Fig. 3 und Fig. 4 ist zusätzlich zum ersten Anschlagelement 8 ein nicht dargestelltes sich in Längsrichtung erstreckendes zweites Anschlagelement 9 vorgesehen, das integral an einem als Anschlagring ausgebildeten dritten Trägerelement 22 angeordnet ist, wobei der Anschlagring 22 koaxial zur Spindel 6 und radial zwischen der Spindel 6 und dem Anschlagring 19 drehbar angeordnet ist. Die Schultern 8 und 9 definieren einen einstellbaren Winkelbereich, indem die nicht dargestellte Schulter 15 zur Längsverstellung der Steuerstange 1 verdreht werden kann. Mittels des zweiten Anschlagrings 22 kann ein anderer Verstellbereich oder Hub eingestellt werden. Im Vergleich zu Fig. 3 kann insbesondere ein kleinerer Hub eingestellt werden. Der Hubbereich der in Fig. 5 dargestellten Steuerstange 1 beträgt ca. 200°. Die Anschlagringe 19 und 22 sind jeweils durch einen Sicherungsbolzen 23A bzw. 23B gegen Verdrehen gesichert. Es ist aber auch denkbar, beide Anschlagringe mit einem einzigen Sicherungsbolzen zu sichern.

Die Anschlagringe 19, 22 sind fixiert, sodass sich die Schultern 8, 9 in einem ersten Zustand Z1 befinden. Soll die Grund-/Voreinstellung durchgeführt werden, so werden die Schultern 8, 9 aus dem ersten Zustand Z1 in einen zweiten Zustand Z2 überführt, in dem die Sicherungsbolzen 23A, 23B aus den entsprechenden jeweiligen Bohrungen 14, 20 entfernt werden. Nun kann die Schulter 15, angetrieben mittels der Spindel 6, über den ehemals vorgegebenen Stellbereich hinaus verdreht werden, um die Steuerstange in Längsrichtung neu grob einzustellen. Dabei schleppt die Schulter 15 die Schultern 8, 9 in Drehrichtung 17, 18 mit. Ist die gewünschte Länge erreicht, werden die Sicherungsbolzen 23A, 23B in die jeweilige Bohrung 14 und in eine entsprechende jeweilige Bohrung 20 eingeführt.

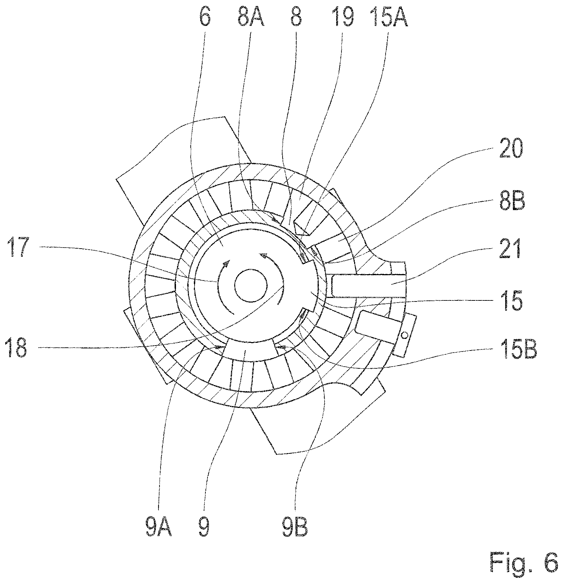

Fig. 6 zeigt eine weitere bevorzugte Ausführungsform. Der Anschlag 19 mit seiner Schulter 8 ist mittels des Sicherungsbolzens 21 gegen Verdrehen gesichert. Der Anschlagring 22 mit seiner Schulter 9 ist hingegen nicht gegen Verdrehung gesichert. Die Schulter 15 der Spindel 6 und die Schulter 8 des Anschlagrings 19 weisen keinen gemeinsamen Überdeckungsbereich in radialer Richtung auf, d. h. die Schulter 15 ist radial beabstandet zur Schulter 8, so dass eine Erweiterung des Stellbereichs oder des Hubs über eine Spindeldrehung hinaus möglich ist. Wird die Schulter 15 zur Längsverstellung der Steuerstange 1 in eine von beiden Drehrichtungen 17, 18 gedreht, so nimmt die Schulter 15 mit ihrem ersten oder zweiten Anlagebereich 15A bzw. 15B die Schulter 9 des nicht dargestellten und nicht fixierten Anschlagrings 22 in Umfangsrichtung solange mit, bis ein erster Anschlagbereich 8A oder ein zweiter Anschlagbereich 8B der Schulter 8 erreicht ist und die Schulter 15 die Schulter 9 gegen die fixierte Schulter 8 drückt. Der Vorteil, der in Fig. 6 dargestellten Ausführungsform, liegt insbesondere darin, dass die Spindel 6 zur Verstellung der Steuerstangenlängsrichtung über eine Spindeldrehung hinaus verdrehbar ist. Der Hubbereich, der in Fig. 6 dargestellten Steuerstange 1 beträgt ca. 630°.

Wird in der Fig. 6 die Spindel 6 mit der Schulter 15 beispielsweise im Uhrzeigersinn 17 gedreht, dreht die Schulter 15 bis sie mit ihrem Anlagebereich 15B an einem Anschlagbereich 9B der Schulter 9 anliegt. Die Schulter 15 nimmt die nicht fixierte Schulter 9 in Drehrichtung mit, bis ein Anschlagbereich 9A der Schulter 9 am Anschlagbereich 8A der fixierten Schulter 8 anschlägt.

Wird in der Fig. 6 die Spindel 6 mit der Schulter 15 beispielsweise gegen den Uhrzeigersinn 18 gedreht, dreht die Schulter 15 zunächst berührungslos an der Schulter 8 vorbei, bis die Schulter 15 mit ihrem Anlagebereich 15A an einen Anschlagbereich 9A der Schulter 9 anliegt. Die Schulter 15 nimmt die nicht fixierte Schulter 9 in Drehrichtung mit, bis der Anschlagbereich 9B der Schulter 9 am Anschlagbereich 8B der fixierten Schulter anschlägt.

Die Grund-/Voreinstellung der Steuerstange in der Fig. 6 verhält sich sinngemäß zu Fig. 4 und 5.

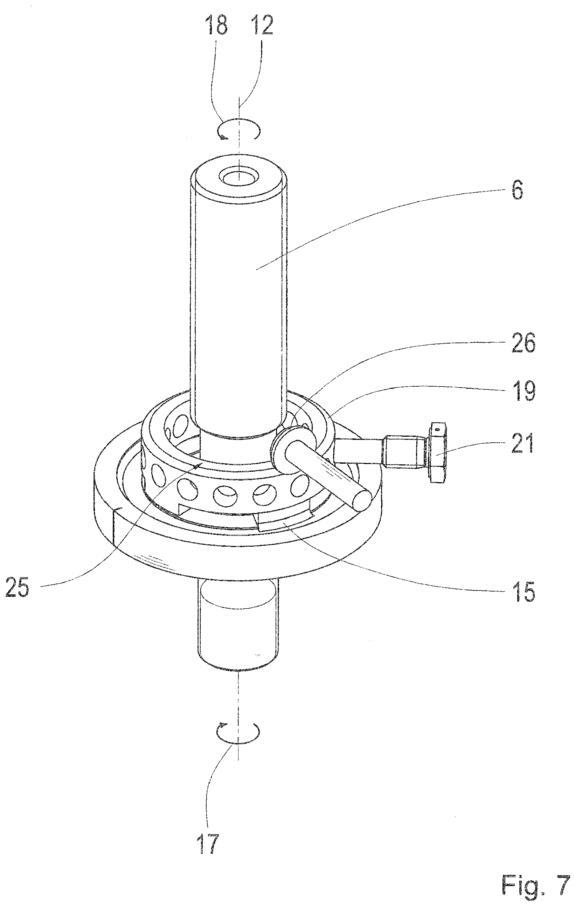

Fig. 7 zeigt beispielhaft wie der Anschlagring 19 mittels eines Kegelradgetriebes verstellt werden kann. Hierfür weist der Anschlagring 19 an einer oberen Seite eine Verzahnung 25 auf und wirkt sozusagen wie ein Tellerrad. Zur Einstellung des Stellbereiches wird ein erstes als Kegelritzel ausgebildetes Bediengerät 26 durch eine Bohrung 14 im Gehäuse geführt und auf die Verzahnung 25 gesetzt und fixiert, so dass das Ritzel 26 mit der Verzahnung 25 des Anschlagrings 19 in Eingriff ist. Nun wird der Sicherungsbolzen 21 des Anschlagrings 19 entfernt und durch Drehung des Ritzels 26 der Anschlagring 19 in eine von beiden Richtungen 17, 18 gedreht. Das Ritzel 26 ist elektromotorisch angetrieben. Es ist aber auch denkbar es manuell zu verstellen. Ist der Stellbereich eingestellt, wird der Anschlagring 19 mittels des Sicherungsbolzens 21 fixiert und das Bediengerät 26 entfernt. Der in Fig. 7 dargestellte Achswinkel zwischen dem Ritzel 26 und dem Anschlagring 19 beträgt 90°. Es sind aber auch andere Achswinkel denkbar, insbesondere Achswinkel zwischen 0° und 135°.

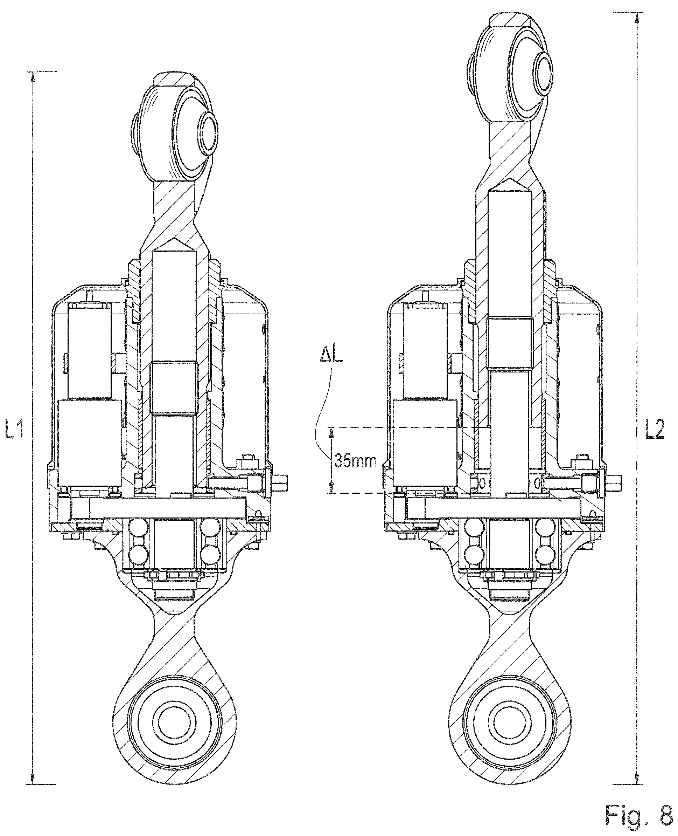

Fig. 8 zeigt beispielhaft eine maximale Längsverstellung der Steuerstange 1. Im linken Bild weist die Steuerstange 1 eine Länge L1 auf. Im rechten Bild weist die Steuerstange eine Länge L2 auf. Der Unterschied ΔL beträgt 35mm.

Fig. 9 zeigt den Stand der Technik. Gemäß Stand der Technik wird für die mechanische Längeneinstellung eine Sicherungsmutter 27 manuell gelöst und ein Sicherungsring 28 manuell angehoben. Eine dann zugängliche Verzahnung 29 der Spindelmutter 5 kann mit einem entsprechenden Zahnschlüssel 30 im Raster der Verzahnung 29 verstellt werden. Die Verdrehung um einen Zahn ist definiert als 1 DET. Mit Hilfe von Markierungen an einer Führungsbuchse und an der Spindelmutterkann die Anzahl der verstellten DET bestimmt und kontrolliert werden. Ist der Verstellbereich nicht ausreichend, muss ein oberes Rod End ausgehangen und das obere Rod End um jeweils eine Umdrehung ein- oder ausgeschraubt werden. Nach dem Verstellen müssen die Einstellgrenzen überprüft werden. Es hat sich herausgestellt, dass dieser Stand der Technik zu mechanisch zu kompliziert ist. Zudem hat sich herausgestellt, dass die Verstellung zur Grund-/Voreinstellung viel Zeit in Anspruch nimmt.

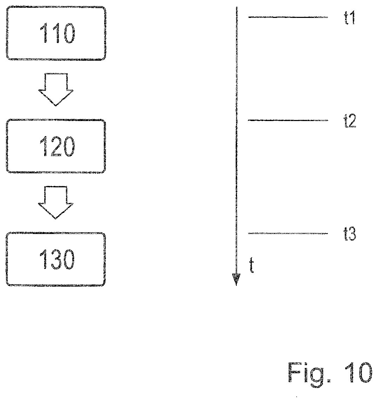

Fig. 10 zeigt einen beispielhaften Prozess des erfindungsgemäßen Verfahrens zur Grund-/Voreinstellung. In Fig. 10 wird zunächst in einem ersten Schritt 110 zu einem Zeitpunkt t1 zumindest ein als Gewindebolzen ausgeführtes Anschlagelement 8, 9 von einer ersten Position P1 in eine zweite Position P2 überführt. D.h., er wird soweit nach radial außen geschraubt oder komplett herausgeschraubt, dass die Spindel mit dem Anlagebereichselement 15 frei drehbar ist. In einem zeitlich t2 daran anschließenden zweiten Schritt 120 wird die Steuerstange von einer ersten Länge L1 gleich 295mm in eine zweite Länge L2 gleich 330mm überführt, also um 35mm verlängert. Natürlich ist auch eine Verkürzung der Steuerstange möglich. Auch sind andere Längen denkbar. In einem zeitlich t3 daran anschließenden dritten Schritt 130 wird der zumindest eine Gewindebolzen 8, 9 von der zweiten Position in die erste Position P1 überführt, also in einer Gehäusebohrung 14 von radial außen nach radial innen eingeschraubt. Nun ist der Gewindebolzen wieder fixiert und begrenzt einen Stellbereich.

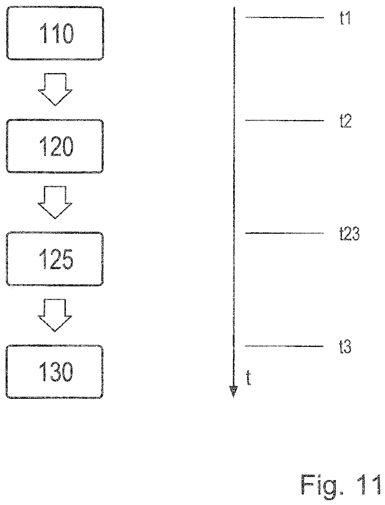

Fig. 11 zeigt einen weiteren beispielhaften Prozess des erfindungsgemäßen Verfahrens zur Grund-/Voreinstellung. In Fig. 11 wird zunächst in einem ersten Schritt 110 zu einem Zeitpunkt t1 ein als eine an einem Anschlagring 19 angeordnete Schulter 8 ausgebildetes Anschlagelement von einem ersten zustand Z1 in einen zweiten Zustand Z2 überführt. D.h. ein Sicherungsbolzen 21 wird zumindest teilweise aus einer Bohrung 14, 20 entfernt, sodass die Spindel mit dem Anlagebereichselement 15 frei drehbar ist. In einem zeitlich t2 daran anschließenden zweiten Schritt 120 wird die Steuerstange von einer ersten Länge L1 gleich 295mm in eine zweite Länge L2 gleich 330mm überführt, also um 35mm verlängert. Natürlich ist auch eine Verkürzung der Steuerstange möglich. Auch sind andere Längen denkbar. In einem zeitlich t3 daran anschließenden dritten Schritt 130 wird der Anschlagring 19 mit der Schulter 8 wieder fixiert, also von dem zweiten Zustand Z2 in den ersten Zustand Z1 überführt. Dies geschieht dadurch, dass der Sicherungsbolzen 21 in die Gehäusebohrung 14 und in eine in Deckung liegende Bohrung 20 des Anschlagrings 19 eingeführt wird. Insbesondere hierzu kann ein zusätzlicher Schritt 125 vorstellbar sein, also ein zeitlich zwischen dem zweiten und dritten liegenden Schritt 120, 130, bei dem in einem Zeitpunkt t23 eine Bohrung 20 des Anschlagrings 19 mit der Gehäusebohrung 14 in Deckung gebracht wird.

Für den Fachmann ist darüber hinaus klar, dass die Verfahren der Fig. 10 und 11 nur beispielhafte erfindungsgemäße Verfahren darstellen. Selbstverständlich sind weitere Schritte für die Grund-/Voreinstellung denkbar.

### Bezugszeichen

- 1: Steuerstange
- 2: Aktor
- 3: Planetengetriebe
- 4: Elektromotor
- 5: Spindelmutter
- 6: Spindel
- 7: Zahnrad-/Stirnradstufe
- 8: erstes Anschlagelement, Gewindebolzen, Nocken, Schulter
- 8 A, B: erster und zweiter Anschlagbereich des ersten Anschlagelements
- 9: zweites Anschlagelement, Gewindebolzen, Nocken, Schulter
- 9 A, B: Anschlagbereiche des zweiten Anschlagelements
- 10: Längsachse des Gewindebolzens 8
- 11: Längsachse des Gewindebolzens 9
- 12: Längsachse der Steuerstange
- 13: Steuerstangengehäuse
- 14: Ausnehmung, Gehäusebohrung
- 15: Anlagebereichselement, Nocken, Schulter
- 15 A, B: erster und zweiter Anlagebereich des Anlagebereichselements
- 16: erstes Trägerelement, Zahnrad
- 17: Drehrichtung Uhrzeigersinn
- 18: Drehrichtung Gegenuhrzeigersinn
- 19: zweites Trägerelement, erster Anschlagring
- 20: Ausnehmung, Bohrungen Anschlagring 19
- 21: Fixiermittel für Anschlagring 19, Sicherungsbolzen
- 22: drittes Trägerelement zweiter Anschlagring
- 23 A, B: Fixiermittel, Sicherungsbolzen
- 24: obere Seite
- 25: Verzahnung
- 26: Bediengerät, Kegelritzel
- 27: Sicherungsmutter
- 28: Sicherungsring
- 29: Verzahnung
- 30: Zahnschlüssel
- P1, P2: erste, zweite Position
- Z1, Z2: erster, zweiter Zustand
- L1, L2: erste, zweite Länge
- t1, t2, t3, t23: Zeitpunkte

## Patentansprüche

1. Steuerstange (1) zum Verstellen von einem Rotorblatt eines Hubschraubers, wobei die Steuerstange (1) in Längsrichtung verstellbar ist, umfassend:
- zumindest ein Anlagebereichselement (15), das um die Längsachse der Steuerstange (1) verdrehbar angeordnet ist,
- zumindest ein Anschlagelement (8, 9), das ausgebildet ist, die Verstellbarkeit der Steuerstange (1) in Längsrichtung auf einen vorgebbaren Stellbereich in Zusammenwirken mit dem zumindest einen Anlagebereichselement (15) zu begrenzen, wobei das zumindest eine Anschlagelement (8, 9) von einem ersten Zustand in einen zweiten Zustand überführbar ist, und umgekehrt, wobei das zumindest eine Anschlagelement (8, 9) in dem ersten Zustand die Verstellbarkeit der Steuerstange begrenzt und in dem zweiten Zustand die Verstellbarkeit der Steuerstange (1) über den vorgebbaren Stellbereich hinaus zulässt,
**dadurch gekennzeichnet, dass** das Anschlagelement (8, 9) im ersten Zustand eine Verdrehung des Anlagebereichselements (15) auf einen Verdrehbereich beschränkt.

2. Steuerstange nach Anspruch 1, **dadurch gekennzeichnet, dass** das zumindest eine Anschlagelement (8, 9) ein Gewindebolzen ist, wobei er derart angeordnet ist, dass seine Längsachse (10, 11) im Wesentlichen senkrecht zur Längsachse (12) der Steuerstange (1) ausgerichtet ist, wobei der zumindest eine Gewindebolzen (8,9) in radialer Richtung von der ersten Position in die zweite Position überführbar ist, um von einem ersten Zustand in einen zweiten Zustand überführt zu werden.

3. Steuerstange nach Anspruch 1 oder 2, **dadurch gekennzeichnet, dass** das zumindest eine Anschlagelement (8, 9) ein Gewindebolzen ist, der in eine entsprechende Ausnehmung (14) eines Steuerstangengehäuses einführbar ist.

4. Steuerstange nach Anspruch 1, **dadurch gekennzeichnet,**
- **dass** die Steuerstange (1) ein koaxial zu ihr und drehbar um Ihre Längsachse (12) angeordnetes erstes Trägerelement (16) mit zumindest einem sich in Längsrichtung der Steuerstange (1) erstreckenden und in Umfangsrichtung unterbrochenen ersten Vorsprung aufweist, wobei dieser Vorsprung das Anlagebereichselement (15) bildet, und
- **dass** das zumindest eine Anschlagelement (8, 9) an zumindest einem koaxial zur Steuerstange (1) angeordneten zweiten Trägerelement (19) angeordnet ist, wobei das Anschlagelement (8, 9) mittels eines sich in Längsrichtung der Steuerstange (1) erstreckenden zweiten Vorsprungs gebildet wird,
- wobei das Anschlagelement (8, 9) in dem ersten Zustand (Z1) mit einem Steuerstangengehäuse (13) verbunden ist, wodurch in dem ersten Zustand (Z1) die Verstellbarkeit der Steuerstange (1) begrenzt wird und in dem zweiten Zustand (Z2) diese Verbindung aufgehoben ist, wodurch die Verstellbarkeit über den vorgebbaren Stellbereich hinaus zugelassen wird.

5. Steuerstange nach einem der vorhergehenden Ansprüche, **dadurch gekennzeichnet, dass** die Steuerstange (1) in Längsrichtung elektrisch mittels eines Aktors (2) verstellbar ist.

6. Steuerstange nach Anspruch 5, **dadurch gekennzeichnet, dass** der Aktor zur Verstellung der Steuerstange (1) einen Spindeltrieb umfasst, wobei eine Spindel (5) des Spindeltriebs über eine Zahnradstufe (6) von einem über einen Elektromotor (3) angetriebenen Planetengetriebe (2) antreibbar ist, wobei die Spindel (5) zur Verstellung der Steuerstange (1) eine Spindelmutter (4) axial bewegt.

7. Steuerstange nach Anspruch 6, **dadurch gekennzeichnet, dass** das zumindest eine Anlagebereichselement (15) drehfest mit einem Zahnrad (16) der Zahnradstufe (7) verbunden ist.

8. Steuerstange nach Anspruch 6 oder 7, **dadurch gekennzeichnet, dass** das zumindest eine Anlagebereichselement (15) integral mit einem Zahnrad (16) der Zahnradstufe (7) ausgebildet ist.

9. Steuerstange nach einem der Ansprüche 5 bis 8, **dadurch gekennzeichnet, dass** der Aktor (2) in Abhängigkeit von Sollvorgaben und von Istpositionen sowie von Sensorsignalen ansteuerbar ist.

10. Steuerstange nach einem der vorhergehenden Ansprüche, **dadurch gekennzeichnet, dass** das zumindest eine Anschlagelement (15) in Umfangsrichtung der Steuerstange (1) zur Veränderung des vorgebbaren Stellbereiches verstellbar ist.

11. Verfahren zur Längsverstellung einer Steuerstange (1), die Steuerstange umfassend zumindest ein Anlagebereichselement (15), das um die Längsachse der Steuerstange (1) verdrehbar angeordnet ist, zumindest ein Anschlagelement (8, 9), das ausgebildet ist, die Verstellbarkeit der Steuerstange (1) in Längsrichtung auf einen vorgebbaren Stellbereich in Zusammenwirken mit dem zumindest einen Anlagebereichselement (15) zu begrenzen, umfassend die Schritte:
- Überführen des zumindest einen Anschlagelements (8, 9) von einem ersten Zustand in einen zweiten Zustand, wobei das zumindest eine Anschlagelement (8, 9) in dem ersten Zustand die Verstellbarkeit der Steuerstange begrenzt und in dem zweiten Zustand die Verstellbarkeit der Steuerstange (1) über den vorgebbaren Stellbereich hinaus zulässt, sodass die Begrenzung des Stellbereichs aufgehoben wird in einem ersten Schritt 110 zu einem Zeitpunkt t1,
- Überführen der Steuerstange (1) von einer ersten Länge (L1) in eine zweite Länge (L2) in einem zweiten Schritt 120 in einem Zeitpunkt t2,
- Überführen des zumindest einen Anschlagelements (8, 9) von dem zweiten Zustand (Z2) in den ersten Zustand (Z1), wobei das Anschlagelement (8,9) im ersten Zustand eine Verdrehung des Anlagebereichselements (15) auf einen Verdrehbereich beschränkt, sodass der Verstellbereich begrenzt wird in einem dritten Schritt 110 zu einem Zeitpunkt t3,
- wobei t1 <t2<t3 ist.

12. Verfahren nach Anspruch 11, **dadurch gekennzeichnet, dass** die Überführung im zweiten Schritt 120 elektromotorisch und die Überführung im ersten Schritt 110 und dritten Schritt 130 manuell erfolgt.

## Claims

1. Control rod (1) for adjusting a rotor blade of a helicopter, wherein the control rod (1) can be adjusted in the longitudinal direction, said control rod comprising:
- at least one bearing-region element (15), which is arranged rotatably about the longitudinal axis of the control rod (1),
- at least one stop element (8, 9), which is designed to delimit the adjustability of the control rod (1) in the longitudinal direction to a predefinable adjustment range in interaction with the at least one bearing-region element (15), wherein the at least one stop element (8, 9) can be transferred from a first state to a second state, and vice versa, wherein the at least one stop element (8, 9) delimits the adjustability of the control rod in the first state and permits the adjustability of the control rod (1) beyond the predefinable adjustment range in the second state,
**characterized in that** the stop element (8, 9) restricts a rotation of the bearing-region element (15) to a rotational range in the first state.

2. Control rod according to Claim 1, **characterized in that** the at least one stop element (8, 9) is a threaded bolt, wherein it is arranged in such a way that its longitudinal axis (10, 11) is aligned substantially perpendicularly to the longitudinal axis (12) of the control rod (1), wherein the at least one threaded bolt (8, 9) can be transferred in a radial direction from the first position to the second position in order to be transferred from a first state to a second state.

3. Control rod according to Claim 1 or 2, **characterized in that** the at least one stop element (8, 9) is a threaded bolt, which can be inserted into a corresponding recess (14) of a control-rod housing.

4. Control rod according to Claim 1, **characterized**
- **in that** the control rod (1) has a first carrier element (16) which is arranged coaxially with respect to said control rod and so as to be able to rotate about the longitudinal axis (12) of said control rod and has at least one first projection which extends in the longitudinal direction of the control rod (1) and is interrupted in the circumferential direction, wherein this projection forms the bearing-region element (15), and
- **in that** the at least one stop element (8, 9) is arranged on at least one second carrier element (19) arranged coaxially with respect to the control rod (1), wherein the stop element (8, 9) is formed by means of a second projection extending in the longitudinal direction of the control rod (1),
- wherein the stop element (8, 9) is connected to a control-rod housing (13) in the first state (Z1), as a result of which the adjustability of the control rod (1) is delimited in the first state (Z1) and this connection is removed in the second state (Z2), as a result of which the adjustability is permitted over the predefinable adjustment range.

5. Control rod according to one of the preceding claims, **characterized in that** the control rod (1) can be adjusted in the longitudinal direction electrically by means of an actuator (2).

6. Control rod according to Claim 5, **characterized in that** the actuator comprises a spindle drive for the purpose of adjusting the control rod (1), wherein a spindle (5) of the spindle drive can be driven by a toothed gear stage (6) of a planetary transmission (2) which is driven by an electric motor (3), wherein the spindle (5) axially moves a spindle nut (4) in order to adjust the control rod (1).

7. Control rod according to Claim 6, **characterized in that** the at least one bearing-region element (15) is connected to a toothed gear (16) of the toothed gear stage (7) for conjoint rotation therewith.

8. Control rod according to Claim 6 or 7, **characterized in that** the at least one bearing-region element (15) is formed integrally with a toothed gear (16) of the toothed gear stage (7).

9. Control rod according to one of Claims 5 to 8, **characterized in that** the actuator (2) can be controlled in dependence on desired specifications and on actual positions and on sensor signals.

10. Control rod according to one of the preceding claims, **characterized in that** the at least one stop element (15) can be adjusted in the circumferential direction of the control rod (1) in order to change the predefinable adjustment range.

11. Method for longitudinally adjusting a control rod (1), the control rod comprising at least one bearing-region element (15), which is arranged rotatably about the longitudinal axis of the control rod (1), at least one stop element (8, 9), which is designed to delimit the adjustability of the control rod (1) in the longitudinal direction to a predefinable adjustment range in interaction with the at least one bearing-region element (15), said method comprising the following steps:
- transferring the at least one stop element (8, 9) from a first state to a second state, wherein the at least one stop element (8, 9) delimits the adjustability of the control rod in the first state and permits the adjustability of the control rod (1) beyond the predefinable adjustment region in the second state, with the result that, in a first step 110, the delimitation of the adjustment range is stopped at a point in time t1,
- in a second step 120, transferring the control rod (1) from a first length (L1) to a second length (L2) at a point in time t2,
- transferring the at least one stop element (8, 9) from the second state (Z2) to the first state (Z1), wherein the stop element (8, 9) restricts a rotation of the bearing-region element (15) to a rotational range in the first state, with the result that, in a third step 110, the adjustment range is delimited at a point in time t3,
- wherein t1 < t2 < t3.

12. Method according to Claim 11, **characterized in that** the transfer in the second step 120 is performed electromotively and the transfer in the first step 110 and the third step 130 is performed manually.

## Revendications

1. Barre de commande (1) destinée au réglage d'une pale de rotor d'hélicoptère, la barre de commande (1) étant réglable dans la direction longitudinale, ladite barre comprenant :
- au moins un élément de zone d'appui (15) qui est disposé de manière à pouvoir tourner sur l'axe longitudinal de la barre de commande (1),
- au moins un élément de butée (8, 9) qui est conçu pour limiter la capacité de réglage de la barre de commande (1) dans la direction longitudinale à une plage de réglage spécifiable en coopération avec l'au moins un élément de zone d'appui (15), l'au moins un élément de butée (8, 9) pouvant être transféré d'un premier état à un deuxième état, et inversement, l'au moins un élément de butée (8, 9) limitant dans le premier état la capacité de réglage de la barre de commande et permettant dans le deuxième état la capacité de réglage de la barre de commande (1) au-delà de la plage de réglage spécifiable,
**caractérisée en ce que** l'élément de butée (8, 9) restreint dans le premier état une rotation de l'élément de zone d'appui (15) à une zone de rotation.

2. Barre de commande selon la revendication 1, **caractérisée en ce que** l'au moins un élément de butée (8, 9) est un boulon fileté, ledit boulon fileté étant disposé de telle sorte que son axe longitudinal (10, 11) soit orienté sensiblement perpendiculairement à l'axe longitudinal (12) de la barre de commande (1), l'au moins un boulon fileté (8, 9) pouvant être transféré dans la direction radiale de la première position à la deuxième position afin d'être transféré d'un premier état à un deuxième état.

3. Barre de commande selon la revendication 1 ou 2, **caractérisée en ce que** l'au moins un élément de butée (8, 9) est un boulon fileté qui peut être inséré dans un évidement correspondant (14) d'un boîtier de barre de commande.

4. Barre de commande selon la revendication 1, **caractérisée en ce que**
- la barre de commande (1) comporte un premier élément porteur (16) qui est disposé coaxialement à celle-ci et de manière à pouvoir tourner sur son axe longitudinal (12) et qui comprend au moins une première saillie s'étendant dans la direction longitudinale de la barre de commande (1) et interrompue dans la direction circonférentielle, cette saillie formant l'élément de zone d'appui (15), et
- l'au moins un élément de butée (8, 9) est disposé sur au moins un deuxième élément porteur (19) disposé coaxialement à la barre de commande (1), l'élément de butée (8, 9) étant formé au moyen d'une deuxième saillie s'étendant dans la direction longitudinale de la barre de commande (1),
- l'élément de butée (8, 9) étant relié dans le premier état (Z1) à un boîtier de barre de commande (13), ce qui limite dans le premier état (Z1) la capacité de réglage de la barre de commande (1) et La liaison étant interrompue, dans le deuxième état (Z2), ce qui permet le réglage au-delà de la plage de réglage spécifiable.

5. Barre de commande selon l'une des revendications précédentes, **caractérisée en ce que** la barre de commande (1) est réglable électriquement au moyen d'un actionneur (2) dans la direction longitudinale.

6. Barre de commande selon la revendication 5, **caractérisée en ce que** l'actionneur de réglage de la barre de commande (1) comprend un entraînement de broche, une broche (5) de l'entraînement de broche pouvant être entraînée par un engrenage planétaire (2), entraîné par un moteur électrique (3), par le biais d'un étage à roues dentée (6), la broche (5) déplaçant axialement un écrou de broche (4) afin de régler la barre de commande (1).

7. Barre de commande selon la revendication 6, **caractérisée en ce que** l'au moins un élément de zone d'appui (15) est relié solidairement en rotation à une roue dentée (16) de l'étage de roues dentées (7).

8. Barre de commande selon la revendication 6 ou 7, **caractérisée en ce que** l'au moins un élément de zone d'appui (15) est formé de manière solidaire à une roue dentée (16) de l'étage de roues dentées (7).

9. Barre de commande selon l'une des revendications 5 à 8, **caractérisée en ce que** l'actionneur (2) peut être commandé en fonction de consignes et de positions réelles et de signaux de capteurs.

10. Barre de commande selon l'une des revendications précédentes, **caractérisée en ce que** l'au moins un élément de butée (15) est réglable dans la direction circonférentielle de la barre de commande (1) afin de modifier la plage de réglage spécifiable.

11. Procédé de réglage longitudinal d'une barre de commande (1), la barre de commande comprenant au moins un élément de zone d'appui (15) qui est disposé de manière à pouvoir tourner sur l'axe longitudinal de la barre de commande (1), au moins un élément de butée (8, 9) qui est conçu pour limiter la capacité de réglage de la barre de commande (1) dans la direction longitudinale à une plage de réglage spécifiable en coopération avec l'au moins un élément de zone d'appui (15), ledit procédé comprenant les étapes suivantes :
- transférer l'au moins un élément de butée (8, 9) d'un premier état à un deuxième état, l'au moins un élément de butée (8, 9) limitant dans le premier état la capacité de réglage de la barre de commande et permettant dans le deuxième état la capacité de réglage de la barre de commande (1) au-delà de la plage de réglage spécifiable, ce qui supprime la limitation de la plage de réglage dans une première étape 110 à un instant t1,
- transférer la barre de commande (1) d'une première longueur (L1) à une deuxième longueur (L2) dans une deuxième étape 120 à un instant t2,
- transférer l'au moins un élément de butée (8, 9) du deuxième état (Z2) au premier état (Z1), l'élément de butée (8, 9) restreignant dans le premier état une rotation de l'élément de zone d'appui (15) à une zone de rotation de sorte que la zone de réglage soit limitée dans une troisième étape 110 à un instant t3,
- t1 < t2 < t3.

12. Procédé selon la revendication 11, **caractérisé en ce que** le transfert à la deuxième étape 120 est effectué par un moteur électrique et le transfert à la première étape 110 et à la troisième étape 130 est effectué manuellement.
